# EUROPEAN PATENT SPECIFICATION

(11) **EP 0 629 805 B1**
(45) Date of publication and mention of the grant of the patent: **27.08.1997**
(21) Application number: 94200989.5
(22) Date of filing: 12.04.1994
(51) Int. Cl.: F16L 11/10, F16L 11/08, F16L 33/28

(54) **Flexible hose**
Biegsamer Schlauch
Tuyau flexible

(30) Priority: 17.06.1993 GB 9312461
(43) Date of publication of application: 21.12.1994
(73) Proprietor: AFLEX HOSE LIMITED, Brighouse, West Yorkshire HD6 1EJ (GB)
(72) Inventor: Anderson, Rod, Brighouse, West Yorkshire (GB)
(74) Representative: Wharton, Peter Robert

(56) References cited:
- EP-A- 0 192 922
- DE-B- 1 212 371
- DE-U- 8 531 297
- FR-A- 2 297 374
- US-A- 4 157 101
- US-A- 4 706 712
- US-A- 5 062 456

## Description

The present invention relates to a flexible reinforced lined hose assembly for use in particular in foodstuffs and chemical manufacturing plants.

Hose assemblies comprising a fluorocarbon (PTFE which is polytetrafluoroethylene, PFA which is perfluoralkoxy or FEP which is fluorinated ethylene-propylene, all plastics supplied by Du Pont under the Trade Name TEFLON) lining are commonly used in foodstuffs and chemical manufacturing plants, where the chemical resistance and non-stick nature of the fluorocarbon are a major advantage.

However, fluorocarbons are not fully flexible materials and hose designs for bore sizes above approximately 20mm render the hose either resistant to kinking and vacuum collapse of the liner but very stiff, or flexible but kink-prone and not vacuum resistant.

One approach to solve this problem is to convolute the fluorocarbon liner which renders the hose both flexible and vacuum and kink-resistant but introduces another problem in that process fluids passing through the hose can collect in the convolutions, so that the hose is no longer self-draining and self-cleaning, and is therefore only suitable for use in the aforementioned industries in situations where these properties are not required.

Another approach for larger fluorocarbon lined hose assemblies is to reinforce the liner against kinking and vacuum by bonding the liner externally to a rubber cover which incorporates textile braids or wraps, and a helical wire reinforcement. One disadvantage of this design is that bonding the fluorocarbon liner to the rubber cover makes the resultant hose stiffer than it would otherwise be. Another disadvantage is that the bonding makes it impossible to attach end fittings in such a manner that the self-cleaning and self-draining facilities of the hose are maintained. Examples of such "bonded" reinforced hose assemblies are disclosed in US Patent No 5,062,456 (to Cooke et al) and US Patent No 4,706,712 (Oglesby et al), both of which describe bonding the liner to one or more external layers, with soft (textile or rubber) layers between the liner and the helical reinforcing wire.

An example of a reinforced hose assembly having an inner rubber liner, its method of manufacture and a method of securing to it an end fitting, is disclosed in DE-B-1 212 371.

It is also known to reinforce a fluorocarbon liner by winding a wire helically and directly on to the liner, to increase the pressure resistance of the hose. In this case the wire is always wound at touch pitch (i.e closed pitch) at a particular angle, and there are always an even number, typically 2, 4 or 6, of helical windings wound in opposite directions on top of each other. The disadvantage of this hose design is that the closed pitch and multiple helices renders the hose extremely stiff.

It is therefore the aim of the present invention to provide a smooth bore lined hose which is both kink-resistant, vacuum resistant and flexible, as well as being capable of assembly to end fittings in such a manner as to ensure complete inner cleanability and self drainability.

According to the present invention there is provided a flexible lined hose assembly including a smooth bore liner reinforced by a wire wound helically and with an open pitch, characterised in that the liner is not bonded to any external layer and in that the wire is wound either directly on to the outside of the liner or on to a substantially radially rigid reinforcing layer surrounding said liner.

Typically, the liner is a fluorocarbon liner of either PTFE, PFA or FEP.

Preferably, the pitch is at least 1.25 times the wire diameter.

Preferably, the pitch is between 1.25 and 20 times the wire diameter.

Preferably, the wire is high tensile wire which is wound in a single helix. It is preferred that the wire diameter is not less than 0.5mm diameter.

Preferably, the reinforcing layer comprises a wire braid.

Either the helical wire or the braid may be applied to the outside of the liner first, then the other to achieve the desired effect. This construction is then covered with a rubber cover which fully or partially encapsulates the helical wire. Thus, there is no direct bonding between the liner and the rubber cover which gives certain advantages which will be explained in more detail hereinafter.

Typically, the wire braid and the helical wire are either of stainless steel or carbon steel wire.

Typically, the rubber cover may be EPDM, Neoprene, Nitrile, Hypalon or silicone rubber.

According to a second aspect of the present invention there is provided a method of manufacturing a flexible lined hose assembly including a smooth bore liner, the method being characterised in that it includes the step of helically winding a wire with an open pitch either directly on to the liner or on to a substantially radially rigid reinforcing layer surrounding said liner, without any bonding between the liner and any external layer.

Preferably, the reinforcing layer comprises a braid , which may be applied either directly on to the outside of the liner or over the helical wire then, optionally, applying and vulcanising an outer rubber cover on to the assembly, the cover thus forming around and fully or partially encapsulating the helical wire (but not necessarily the braid).

According to a third aspect of the present invention there is provided a method of securing an end fitting to a hose assembly including a smooth bore liner reinforced by a wire wound helically and with an open pitch either directly on to the liner or on to a substantially radially rigid reinforcing layer surrounding said liner without any bonding between the liner and any external layer, the method comprising attaching the fitting to an end of the hose assembly by passing the liner through the inside of the end fitting and then flaring the end of the liner out to form a sealing face, such that the hose assemby with end fitting thus attached has no restriction in the bore and no potential material entrapment sites.

The reinforcing layer, eg braid is preferably secured to the outside of the end fitting by crimping or welding. The helical wire and rubber cover may either form part of the crimp "sandwich", or they may be cut back to allow the braid to the crimped or welded independently.

Typically, the end fitting is made of stainless steel or carbon steel.

Conveniently, the end fitting is a flanged end fitting, a "cam action" end fitting or a hygienic end fitting such as those to the following general specifications: DIN 11851, RJT, SMS and Triclover.

Preferably, the end fitting is attached by cutting back the rubber cover and the helical wire to expose the braid and liner. The braid is then cut back as far as is necessary to permit insertion of an end fitting spigot between the braid end and the liner, the braid running up on to the outside of the spigot, while the liner passes through the bore of the spigot. The braid is then crimped or welded to the spigot, while the liner is flared out to form a sealing face.

An end fitting which is fitted as described above is known as an "integral lined and flared" end fitting.

An embodiment of the present invention will now be described and contrasted with the prior art with reference to the accompanying drawings in which:-
Figures 1 & 2 illustrate two different known types of reinforced lined hose assemblies,
Figure 3 illustrates one known design of reinforced smooth bore lined hose, shown with a typical fluorocarbon lined end fitting attached, and
Figure 4 illustrates a smooth bore lined hose according to the present invention, shown with an "integral lined and flared" end fitting attached.

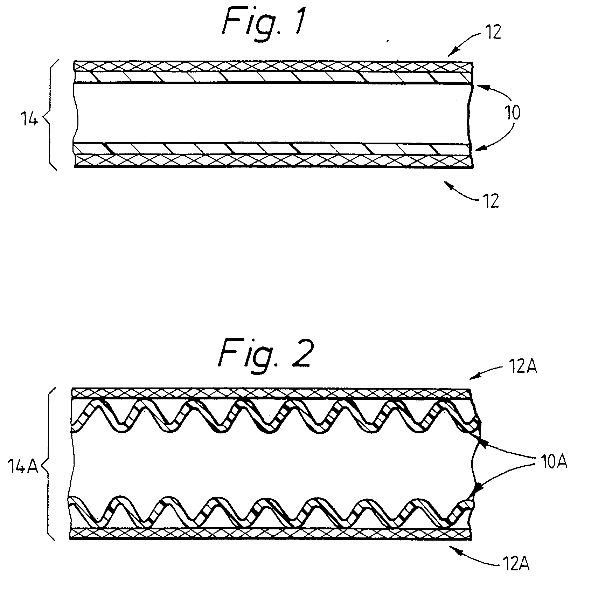

Referring to Figures 1 to 3 of the present invention, existing hose designs will now be described in detail.

As shown in Figures 1 & 2, existing hose designs may be of the smooth bore liner type shown in Figure 1 or a convoluted liner type shown in Figure 2. In each case the hose comprises a fluorocarbon liner 10 (10A) surrounded by some form of external reinforcement indicated by 12 (12A), forming a reinforced hose assembly 14 (14A). The present invention relates to a hose assembly incorporating a smooth bore liner of the type shown in Figure 1.

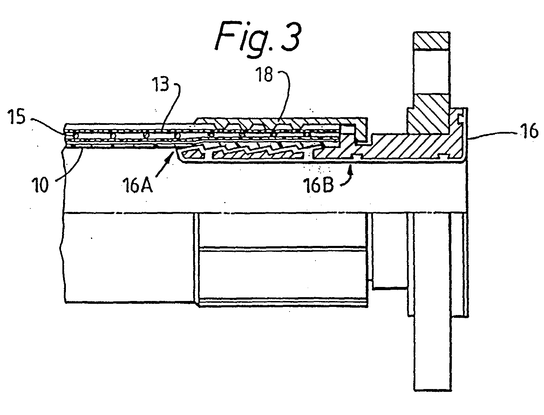

Referring now to Figure 3, a known design of smooth bore lined hose is shown, which exhibits resistance to kinking and vacuum, and comprises a smooth bore fluorocarbon liner 10 surrounded by and bonded to a rubber and braid matrix 13 within which is embedded a helical wire 15. However, this cannot be assembled to an integral lined and flared end because the liner is bonded to the outer cover. A typical end fitting spigot 16, which is itself fluorocarbon lined, is inserted into the bore of the liner 10, then secured to the hose by crimping a steel ferrule 18 radially inwards, compressing the hose and liner 10 and 13 on to the spigot 16. As will be seen from Figure 3, this arrangement creates a material entrapment ledge 16A and a bore restriction 16B which prevents self-draining.

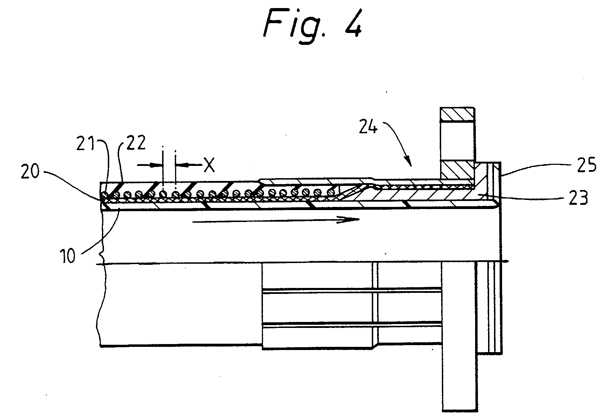

Referring now to Figure 4, a flexible lined hose assembly according to the present invention comprises a smooth bore fluorocarbon liner 10 with a reinforcing layer in the form of an outer stainless steel wire braid 20. On to the outer surface of the braid 20 is wound directly, and in a single helix with open pitch, a wire 21. In the illustrated preferred embodiment this construction is embedded within a rubber cover 22 which encapsulates and holds in place the helical windings.

The fluorocarbon liner may comprise PTFE, PFA or FEP, and the wire is preferably high tensile carbon steel or stainless steel.

Typically, the pitch x of the single helix is between 1.25 and 20 times the wire diameter.

By winding the open pitch helical wire 21 directly and very tightly onto the outside of the stainless steel wire braided fluorocarbon liner tube, instead of being separately and loosely embedded in the rubber/braid matrix, remarkable improvements in flexibility and kink resistance result. Furthermore, the product has full vacuum resistance without bonding the outside of the liner to the cover.

Because the liner 10 is not bonded to the braid 20 it is possible to insert a steel spigot 23 between the liner 10 and the braid 20. The helical wire 21 and rubber cover 22 are cut back, and the braid 20 is then secured to the hose by crimping a steel ferrule 24 radially inwards, compressing the braid 20 on to the spigot 23. The liner 10 is then flared out to form the sealing face 25 of the spigot 23. This results in an end fitting which does not have any restriction in the bore, nor any potential entrapment site where small quantities of material could become trapped to form a bacterial breeding ground. Fluid flow through the hose assembly of the present invention is optimised, with no turbulence.

## Claims

1. A flexible lined hose assembly including a smooth bore liner (10) reinforced by a wire (21) wound helically and with an open pitch, characterised in that the liner is not bonded to any external layer and in that the wire is wound either directly on to the outside of the liner or on to a substantially radially rigid reinforcing layer (20) surrounding said liner.

2. An assembly according to Claim 1 further characterised in that the pitch is at least 1.25 times the wire diameter.

3. An assembly according to Claim 1 or Claim 2 further characterised in that the pitch is between 1.25 and 20 times the wire diameter.

4. An assembly according to any of the preceding Claims further characterised in that the liner is a fluorocarbon liner comprising PTFE, PFA or FEP.

5. An assembly according to any of the preceding Claims further characterised in that the wire is wound in a single helix.

6. An assembly according to any of the preceding Claims further characterised in that the wire is high tensile wire of diameter not less than 0.5mm.

7. An assembly according to any of the preceding Claims futher characterised in that the wire (21) is either stainless steel wire or carbon steel wire.

8. An assembly according to any of the preceding Claims further characterised in that the reinforcing layer comprises wire braid (20).

9. An assembly according to Claim 8 further characterised in that the material for the wire braid (20) is either stainless steel wire or carbon steel wire.

10. An assembly according to Claim 8 or Claim 9 further characterised in that the helical wire is applied to the outside of the liner (10) and the wire braid (20) is then applied to the outside of the helical wire.

11. An assembly according to Claim 8 or Claim 9 further characterised in that the wire braid (20) is applied to the outside of the liner (10) and the helical wire (21) is applied to the outside of the braid (20).

12. An assembly according to any of Claims 8 to 11 further characterised in that the liner, wire and braid assembly is covered with a rubber cover (22) which fully or partially encapsulates the helical wire (21).

13. An assembly according to Claim 12 further characterised in that the rubber cover (22) is EPDM, Neoprene, Nitrile, Hypalon or silicone rubber.

14. A method of manufacturing a flexible lined hose assembly including a smooth bore liner (10), the method being characterised in that it includes the step of helically winding a wire (21) with an open pitch either directly on to the liner or on to a substantially radially rigid reinforcing layer (20) surrounding said liner, without any bonding between the liner and any external layer.

15. A method according to Claim 14 further characterised in that the reinforcing layer comprises a braid (20) , which may be applied either directly on to the outside of the liner (10) or over the helical wire (21).

16. A method according to Claim 15 further characterised in that it includes the further step of applying and vulcanising an outer rubber cover (22) on to the assembly, the cover thus forming around and fully or partially encapsulating the helical wire (21).

17. A method of manufacturing a flexible lined hose assembly with an end fitting, the hose assembly including a smooth bore liner (10) which is reinforced by a wire wound helically and with an open pitch either directly on to the liner or on to a substantially radially rigid reinforcing layer (20) surrounding said liner without any bonding between the liner and any external layer, the method comprises attaching the fitting (23,24) to an end of the hose assembly by passing the liner (10) through the inside of the end fitting and then flaring the end of the liner out to form a sealing face (25), such that the hose assemby with end fitting thus attached has no restriction in the bore and no potential material entrapment sites.

## Patentansprüche

1. Biegsame mit Auskleidung versehene Schlauchanordnung, die eine Auskleidung (10) mit glatter Bohrung aufweist, die mit einem Draht (21) verstärkt ist, der wendelförmig und mit einer offenen Ganghöhe gewickelt ist,
dadurch gekennzeichnet,
daß die Auskleidung mit keiner äußeren Schicht verbunden ist und daß der Draht entweder unmittelbar auf die Außenseite der Auskleidung oder auf eine im wesentlichen in Radialrichtung steife Verstärkungsschicht (20), die die Auskleidung umgibt, gewickelt ist.

2. Anordnung nach Anspruch 1,
ferner dadurch gekennzeichnet,
daß die Ganghöhe wenigstens das 1,25fache des Drahtdurchmessers beträgt.

3. Anordnung nach Anspruch 1 oder Anspruch 2,
ferner dadurch gekennzeichnet,
daß die Ganghöhe zwischen dem 1,25- und 20fachen des Drahtdurchmessers liegt.

4. Anordnung nach einem der vorhergehenden Ansprüche,
ferner dadurch gekennzeichnet,
daß die Auskleidung eine Fluorkohlenstoff-Auskleidung ist, die PTFE, PFA oder FEP aufweist.

5. Anordnung nach einem der vorhergehenden Ansprüche,
ferner dadurch gekennzeichnet,
daß der Draht in einer einzigen Wendel gewickelt ist.

6. Anordnung nach einem der vorhergehenden Ansprüche,
ferner dadurch gekennzeichnet,
daß der Draht ein Draht mit hoher Zugfestigkeit mit einem Durchmesser von nicht weniger als 0,5 mm ist.

7. Anordnung nach einem der vorhergehenden Ansprüche,
ferner dadurch gekennzeichnet,
daß der Draht (21) entweder ein rostfreier Stahldraht oder ein Kohlenstoffstahldraht ist.

8. Anordnung nach einem der vorhergehenden Ansprüche,
ferner dadurch gekennzeichnet,
daß die Verstärkungsschicht Drahtgeflecht (20) aufweist.

9. Anordnung nach Anspruch 8,
ferner dadurch gekennzeichnet,
daß das Material für das Drahtgeflecht (20) entweder rostfreier Stahldraht oder Kohlenstoffstahldraht ist.

10. Anordnung nach Anspruch 8 oder Anspruch 9,
ferner dadurch gekennzeichnet,
daß der wendelförmige Draht auf die Außenseite der Auskleidung (10) aufgebracht ist und das Drahtgeflecht (20) anschließend auf die Außenseite des wendelförmigen Drahts aufgebracht ist.

11. Anordnung nach Anspruch 8 oder Anspruch 9,
ferner dadurch gekennzeichnet,
daß das Drahtgeflecht (20) auf die Außenseite der Auskleidung (10) aufgebracht ist und der wendelförmige Draht (21) auf die Außenseite des Geflechts (20) aufgebracht ist.

12. Anordnung nach einem der Ansprüche 8 bis 11,
ferner dadurch gekennzeichnet,
daß die Anordnung aus Auskleidung, Draht und Geflecht mit einem Kautschuküberzug (22) überzogen ist, der den wendelförmigen Draht (21) vollständig oder teilweise einkapselt.

13. Anordnung nach Anspruch 12,
ferner dadurch gekennzeichnet,
daß der Kautschuküberzug EPDM-, Neopren-, Nitril-, Hypalon- oder Siliconkautschuk ist.

14. Verfahren zum Herstellen einer biegsamen, mit Auskleidung versehenen Schlauchanordnung, die eine Auskleidung (10) mit glatter Bohrung aufweist,
wobei das Verfahren dadurch gekennzeichnet ist,
daß es den folgenden Schritt aufweist:
wendelförmiges Wickeln eines Drahts (21) mit einer offenen Ganghöhe entweder unmittelbar auf die Auskleidung oder auf eine im wesentlichen in Radialrichtung steife Verstärkungsschicht (20), die die Auskleidung umgibt, ohne jede Verbindung zwischen der Auskleidung und irgendeiner äußeren Schicht.

15. Verfahren nach Anspruch 14,
ferner dadurch gekennzeichnet,
daß die Verstärkungsschicht ein Geflecht (20) aufweist, das entweder unmittelbar auf die Außenseite der Auskleidung (10) oder über dem wendelförmigen Draht (21) aufgebracht werden kann.

16. Verfahren nach Anspruch 15,
ferner dadurch gekennzeichnet,
daß es den weiteren Schritt des Aufbringens und Vulkanisierens eines äußeren Kautschuküberzugs (22) auf die Anordnung aufweist, so daß der Überzug um den wendelförmigen Draht (21) herum geformt wird und diesen vollständig oder teilweise einkapselt.

17. Verfahren zum Herstellen einer biegsamen, mit Auskleidung versehenen Schlauchanordnung mit einem Endanschluß, wobei die Schlauchanordnung eine Auskleidung (10) mit glatter Bohrung aufweist, die mit einem Draht verstärkt ist, der wendelförmig und mit einer offenen Ganghöhe entweder unmittelbar auf die Auskleidung oder auf eine im wesentlichen in Radialrichtung steife Verstärkungsschicht (20) gewickelt ist, die die Auskleidung umgibt, ohne jede Verbindung zwischen der Auskleidung und irgendeiner äußeren Schicht, wobei das Verfahren folgendes aufweist: Anbringen des Anschlusses (23, 24) an einem Ende der Schlauchanordnung durch Hindurchführen der Auskleidung (10) durch das Innere des Endanschlusses und anschließendes Aufweiten des Endes der Auskleidung, um eine Dichtfläche (25) zu bilden, so daß die Schlauchanordnung mit dem so angebrachten Endanschluß keine Behinderung in der Bohrung und keine potentiellen Materialfangstellen besitzt.

## Revendications

1. Ensemble formant tuyau doublé et flexible comprenant un revêtement (10) lisse renforcé par un fil métallique (21) enroulé de façon hélicoïdale et selon un pas ouvert, caractérisé en ce que le revêtement n'est pas collé à une couche extérieure quelconque et en ce que le fil métallique est enroulé soit directement sur l'extérieur du revêtement, soit sur une couche de renforcement (20) sensiblement rigide radialement entourant le revêtement.

2. Ensemble selon la revendication 1, caractérisé, en outre, en ce que le pas représente au moins 1,25 fois le diamètre du fil métallique.

3. Ensemble selon la revendication 1 ou la revendication 2, caractérisé, en outre, en ce que le pas représente entre 1,25 et 20 fois le diamètre du fil métallique.

4. Ensemble selon l'une quelconque des revendications précédentes, caractérisé, en outre, en ce que le revêtement est un revêtement en fluorocarbone constitué en PTFE, en PFA ou en FEP.

5. Ensemble selon l'une quelconque des revendications précédentes, caractérisé, en outre, en ce que le fil metallique est enroulé en formant une seule hélice.

6. Ensemble selon l'une quelconque des revendications précédentes, caractérisé, en outre, en ce que le fil métallique est un fil à haute résistance à la traction d'un diamètre qui n'est pas inférieur à 0,5 mm.

7. Ensemble selon l'une quelconque des revendications précédentes, caractérisé, en outre, en ce que le fil métallique (21) est constitué soit en acier inoxydable, soit en fil d'acier au carbone.

8. Ensemble selon l'une quelconque des revendications précédentes, caractérisé, en outre, en ce que la couche de renforcement comprend une tresse de fil métallique (20).

9. Ensemble selon la revendication 8, caractérisé, en outre, en ce que le matériau constituant la tresse de fil métallique (20) est soit de l'acier inoxydable, soit du fil d'acier au carbone.

10. Ensemble selon la revendication 8 ou la revendication 9, caractérisé, en outre, en ce que le fil hélicoïdal est appliqué sur l'extérieur du revêtement (10) et en ce que la tresse de fil métallique (20) est ensuite appliquée sur l'extérieur du fil métallique hélicoïdal.

11. Ensemble selon la revendication 8 ou la revendication 9, caractérisé, en outre, en ce que la tresse de fil metallique (20) est appliquée sur l'extérieur du revêtement (10) et en ce que le fil métallique hélicoïdal (21) est appliqué sur l'extérieur de la tresse (20).

12. Ensemble selon l'une quelconque des revendications 8 à 11, caractérisé, en outre, en ce que l'ensemble que forment le revêtement, le fil métallique et la tresse, est recouvert d'une enveloppe en caoutchouc (22) qui enrobe totalement ou partiellement le fil métallique hélicoïdal (21).

13. Ensemble selon la revendication 12, caractérisé, en outre, en ce que l'enveloppe en caoutchouc (22) est constituée en EPDM, en Néoprène, en Nitrile, en Hypalon ou en caoutchouc silicone.

14. Procédé de fabrication d'un ensemble formant tuyau flexible doublé comprenant un revêtement lisse (10), le procédé étant caractérisé en ce qu'il comprend l'étape qui consiste à enrouler hélicoïdalement un fil métallique (21) selon un pas ouvert, soit directement sur le revêtement, soit sur une couche de renforcement (20) sensiblement rigide radialement entourant le revêtement, sans collage entre le revêtement et une quelconque couche extérieure.

15. Procédé selon la revendication 14, caractérisé, en outre, en ce que la couche de renforcement comprend une tresse (20), qui peut être appliquée soit directement sur l'extérieur du revêtement (10), soit sur le fil métallique hélicoïdal (21).

16. Procédé selon la revendication 15, caractérisé, en outre, en qu'il comprend l'étape supplémentaire qui consiste à appliquer et à vulcaniser une enveloppe extérieure en caoutchouc (22) sur l'ensemble, l'enveloppe entourant ainsi et enrobant totalement ou partiellement le fil métallique hélicoïdal (21).

17. Procédé de fabrication d'un ensemble formant tuyau flexible doublé comportant une garniture terminale, l'ensemble formant tuyau comprenant un revêtement lisse (10) qui est renforcé par un fil métallique enroulé hélicoïdalement, selon un pas ouvert, soit directement sur le revêtement, soit sur une couche de renforcement (20) sensiblement rigide radialement entourant le revêtement, sans collage entre le revêtement et une quelconque couche extérieure, le procédé comprenant le fait de fixer la garniture (23, 24) à une extrémité de l'ensemble formant tuyau en passant le revêtement (10) à travers l'intérieur de la garniture terminale et en évasant ensuite l'extrémité du revêtement pour former une face d'étanchéité (25), de telle sorte que l'ensemble formant tuyau, avec sa garniture terminale ainsi fixée, ne présente pas d'étranglement dans le calibre et pas de sites potentiels d'accumulation de matière.
